# FASCICULE DE BREVET EUROPEEN

(11) **EP 0 677 920 B1**
(45) Date de publication et mention de la délivrance du brevet: **01.12.1999**
(21) Numéro de dépôt: 95400833.0
(22) Date de dépôt: 12.04.1995
(51) Int. Cl.: H02P 9/42

(54) **Ensemble turbine-générateur sans réducteur**
Turbinen-Generator-Anordnung ohne Untersetzungsgetriebe
Turbine-generator arrangement without reduction gear

(30) Priorité: 13.04.1994 FR 9404397
(43) Date de publication de la demande: 18.10.1995
(73) Titulaire: EUROPEAN GAS TURBINES SA, F-75116 Paris (FR)
(72) Inventeur: Blanchet, Alain, F-38000 Grenoble (FR)
(74) Mandataire: Gosse, Michel

(56) Documents cités:
- EP-A- 0 033 847
- EP-A- 0 556 593
- US-A- 3 764 815
- US-A- 3 902 073
- US-A- 4 949 021
- US-A- 5 029 263
- US-A- 5 097 195
- PATENT ABSTRACTS OF JAPAN vol. 8 no. 63 (E-233) ,24 Mars 1984 & JP-A-58 212367 (MAEKAWA SEISAKUSHO KK) 10 Décembre 1983,
- PATENT ABSTRACTS OF JAPAN vol. 11 no. 355 (E-558) ,19 Novembre 1987 & JP-A-62 131798 (FUJI ELECTRIC COMP LTD) 15 Juin 1987,
- PATENT ABSTRACTS OF JAPAN vol. 5 no. 125 (E-69) [797] ,12 Août 1981 & JP-A-56 062100 (MITSUBISHI DENKI K.K.) 27 Mai 1981,

## Description

La présente invention concerne les ensembles de production d'énergie électrique comprenant une turbine et un générateur, par exemple une turbine à gaz entraînant un alternateur.

Les turbines à gaz de faible ou moyenne puissance (de quelques MW à quelques dizaines de MW) ont un bon rendement lorsqu'elles tournent à grande vitesse (par exemple de 5000 à 15.000 tours par minute). Pour qu'un alternateur à 2 ou 4 pôles débite à une fréquence industrielle de 50 Hz, sa vitesse doit être de 3000 ou 1500 tours/minute. Pour obtenir une fréquence de 60 Hz avec un alternateur de 2 ou 4 pôles, sa vitesse doit être de 3600 ou 1800 tours/minute. On voit qu'il est nécessaire de prévoir, entre la turbine à gaz et l'alternateur, un réducteur de vitesse. A ces puissances de turbines à gaz, les réducteurs sont réalisables industriellement à des coûts acceptables et avec un bon rendement.

Lorsque les turbines à gaz ont une puissance plus grande (supérieure à 60 MW), ces réducteurs deviennent très encombrants, et de prix prohibitif. Aux puissances les plus élevées, ces réducteurs deviennent impossibles à réaliser, donc la turbine entraîne directement l'alternateur.

C'est pourquoi on est conduit à limiter la vitesse des turbines à gaz de grande puissance à 3000 tours/minute en 50Hz, et à 3600 tours/minute en 60Hz, pour utiliser un alternateur à 2 pôles fournissant directement le courant à la fréquence industrielle.

Ceci est préjudiciable au rendement global de l'ensemble turbine à gaz-alternateur.

On sait par ailleurs qu'une turbine à gaz ne peut démarrer seule puisqu'il faut comprimer l'air dans sa partie compresseur avant d'injecter le combustible dans sa partie chambre de combustion. Ce démarrage est obtenu grâce à un moteur auxiliaire, électrique ou Diesel, ou par un convertisseur statique de démarrage alimenté à partir du réseau alternatif.

On connaît des ensembles turbine-générateur couplés sans réducteur de vitesse, destinés à débiter de l'énergie électrique dans un réseau électrique alternatif de fréquence donnée. Entre le générateur et le réseau est connecté en série un convertisseur statique de fréquence convertissant la tension et le courant délivrés par le générateur à une fréquence différente de celle du réseau en grandeurs correspondantes à la fréquence du réseau.

De tels ensembles sont décrit dans les documents JP-A-58 212 367, JP-A-62 131 798, JP-A-56 062 100. Ces ensembles permettent de pallier la limitation de la vitesse des turbines à gaz pour les grandes puissances.

On connaît également dans l'état de la technique le brevet américain US3902073 concernant la production d'électricité embarquée par une génératrice fournissant l'électricité de bord. Cette génératrice peut être raccordée à une source électrique pour assurer le démarrage de la turbine à laquelle elle est reliée. Il ne s'agit pas d'un équipement destiné à être relié à un réseau de distribution d'électricité, comportant une pluralité de générateurs dont les fréquences doivent être rigoureusement identiques et synchrones.

Le brevet US5097195 concerne la production d'électricité embarquée par un générateur d'électricité produisant un tension à une fréquence relativement élevée - 400 Hz - destinée à l'alimentation locale, et non pas au raccordement d'un réseau comportant d'autres générateurs devant fournir une tension synchrone et équi-fréquence.

Le brevet américain US5029263 concerne la production d'électricité pour un aéronef. Il divulgue simplement le raccordement à une source électrique unique pour le démarrage de la turbine mais pas le raccordement à un réseau électrique comportant une pluralité de générateur.

Le brevet US4949021 décrit un générateur destiné à l'alimentation de bord d'un aéronef, et non pas destiné à être interconnecté avec un réseau électrique comportant d'autres générateurs devant fournir une tension synchrone et équi-fréquence.

Le but de l'invention est d'optimiser le groupe turbine-générateurs en fonction de la puissance électrique fournie par le générateur, par Le réglage de la vitesse de rotation en fonction de la charge du réseau. A cet effet, l'invention concerne un ensemble turbine-générateur de forte puissance supérieure à 60 MW pour la fourniture d'électricité sur un réseau électrique comprenant une turbine et un générateur couplés l'un à l'autre sans réducteur, et un convertisseur statique de fréquence connecté en série entre ledit générateur et un réseau électrique alternatif ayant une fréquence de service de 50 ou de 60 Hz, ledit convertisseur statique de fréquence, en régime de production de l'ensemble turbine-générateur, convertissant la fréquence de la tension et du courant délivrés par le générateur, à la fréquence de service donnée du réseau électrique alternatif et où, en régime de démarrage de l'ensemble turbine-générateur. Le convertisseur statique de fréquence alimente le générateur fonctionnant en moteur pour l'allumage des chambres de combustion de la turbine, en prélevant de l'énergie sur le réseau électrique alternatif. Le convertisseur statique de fréquence s'inverse pour assurer la transmission de la puissance fournie par le générateur vers le réseau après allumage des chambres de combustion. La vitesse de rotation de l'ensemble turbine-générateur est alors ajustée en fonction de la charge débitée dans le réseau électrique alternatif.

De préférence, le générateur est un alternateur de forte puissance comprenant un inducteur. Le cconvertisseur statique de fréquence agit, en régime de production de l'ensemble turbine-générateur, sur l'inducteur pour exciter et/ou réguler ledit alternateur.

Selon une variante particulière, le convertisseur statique de fréquence comprend deux ponts à thyristors commandés par des transformateurs de mesure de la tension et du courant délivrés par le générateur.

Avantageusement, le générateur est un alternateur ou une génératrice asynchrone.

L'un des avantages de la présente invention résulte du fait qu'un même convertisseur statique de fréquence permet de réaliser une pluralité de fonctions qui étaient anciennement réalisées séparément et pour certaines avec des dispositifs très encombrants et peu performant.

Un autre avantage découlant du précèdent résulte du gain de place dû de la suppression des armoires électriques dédiées a l'excitation régulation de l'alternateur ou à la synchronisation de l'alternateur avec le réseau, et la suppression du réducteur et des dispositifs annexes de démarrage de la turbine à gaz.

L'invention sera bien comprise à la lecture de la description ci-après d'un mode préféré de réalisation de l'invention, avec référence au dessin annexé dans lequel:
- les figures 1 à 4 sont des schémas électriques unifilaires d'ensembles de production d'énergie électrique comprenant une turbine à gaz et un alternateur, tels qu'ils existent dans l'art antérieur,
- la figure 5 est un schéma électrique unifilaire d'un ensemble de production d'énergie électrique comprenant une turbine à gaz et un alternateur, selon la présente invention.

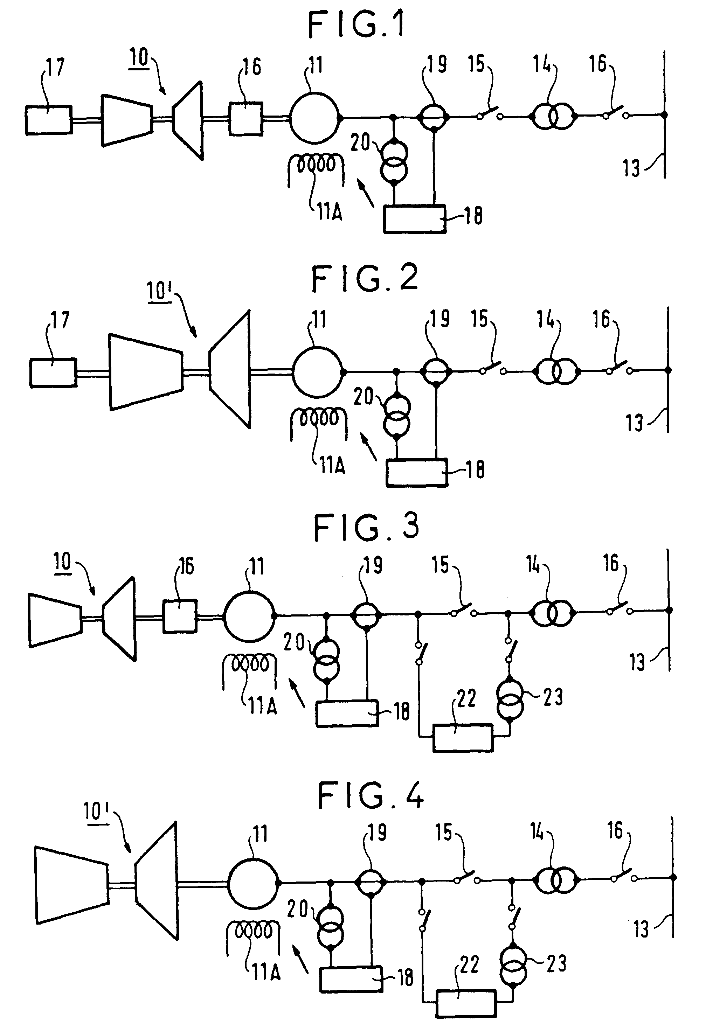

Dans la figure 1, on distingue une turbine à gaz 10, de faible ou moyenne puissance, entraînant un alternateur 11 débitant dans un réseau 13 par l'intermédiaire d'un transformateur 14. Un disjoncteur d'alternateur 15 et un disjoncteur de ligne 16 encadrent le transformateur.

Comme il est montré, un réducteur 16 est inséré entre la turbine à gaz 10 et l'alternateur 11, pour que ce dernier puisse tourner à la vitesse lui permettant de fonctionner à la fréquence industrielle.

Un moteur 17, électrique ou Diesel, permet le démarrage de l'ensemble, comme il a été expliqué plus haut.

L'alternateur possède un inducteur 11A sur lequel un circuit de régulation 18 peut agir pour assurer la régulation de l'alternateur en fonction de la charge.

Le circuit régulateur agit en fonction de mesures du courant et de la tension fournis par l'alternateur, au moyen de transformateurs de mesure 19 et 20.

La figure 2 représente un ensemble analogue à celui de la figure 1, mais dans lequel la turbine à gaz 10' est de forte puissance, de sorte que le réducteur de vitesse 16 a été supprimé. Les autres éléments de l'ensemble restent inchangés et ont reçu dans la figure 2 les mêmes numéros que les éléments analogues de la figure 1.

Dans la figure 3, la turbine à gaz 10 est de nouveau de faible ou moyenne puissance et nécessite un réducteur de vitesse 16 mais le moteur de démarrage est supprimé, le démarrage étant assuré au moyen d'un convertisseur statique de démarrage 22, comprenant un pont thyristors 22 alimenté à partir du réseau par un transformateur de soutirage 23.

Les autres éléments de l'ensemble sont inchangés.

La figure 4 montre un ensemble dans lequel la turbine à gaz 10' est de forte puissance et est donc couplée sans réducteur à l'alternateur 11.

Le moteur de démarrage est supprimé et remplacé, comme dans le cas de la figure 3, par un convertisseur statique de démarrage 22.

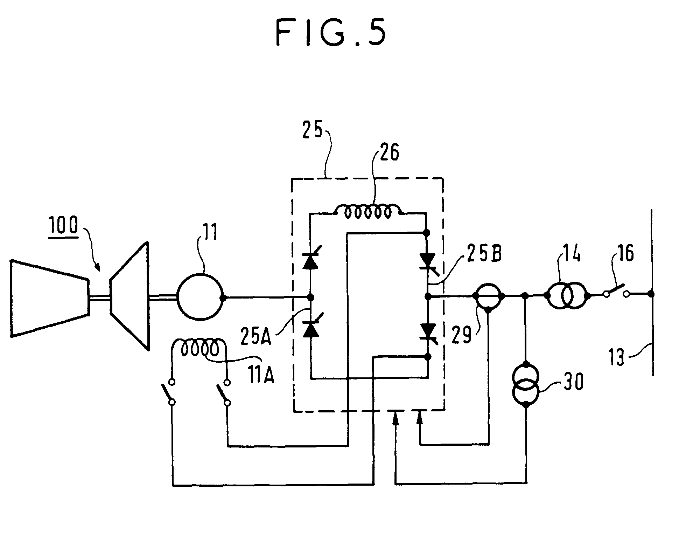

La figure 5 représente un ensemble de production d'énergie électrique selon l'invention.

La turbine à gaz 100 est couplée directement à l'alternateur, et quelle que soit sa puissance, l'ensemble turbine-alternateur peut tourner à sa vitesse optimale. Par exemple la turbine à gaz est une turbine de 40 MW et, lorsqu'elle tourne à 5100 tours/minute, l'alternateur possédant deux pôles, fournit une fréquence de 85Hz.

L'alternateur est en série avec un convertisseur statique de fréquence 25 (en abrégé CSF), lui-même relié au réseau 13 par le transformateur 14 et le disjoncteur de ligne 16.

Le convertisseur comprend deux ponts à thyristors 25A et 25B reliés par une inductance 26.

La commande du CSF s'effectue à partir des mesures du courant et de la tension réalisées au moyen des transformateurs de mesure 29 et 30.

En régime de production de l'ensemble turbine-générateur, Le convertisseur statique de fréquence a pour fonction principale de convertir tension et courant délivrés par l'alternateur à une fréquence différente de celle du réseau (85 Hz dans l'exemple précité), en grandeurs correspondantes à la fréquence du réseau. Il permet ainsi de transmettre la puissance fournie par l'alternateur à la fréquence appropriée.

Le CSF a aussi pour fonction:
a) En régime de production de l'ensemble turbine-générateur, de réguler et/ou exciter l'alternateur, ces fonctions étant dévolues, dans l'art antérieur, à des armoires spécialisées. A cet effet, il utilise les données mesurées par les transformateurs de mesure 29 et 30.
b) en régime de démarrage de l'ensemble turbine-générateur, de fournir, par prélèvement sur le réseau, les grandeurs de courant et de fréquence pour alimenter le générateur fonctionnant alors en moteur. Après l'allumage des chambres de combustion, le convertisseur statique de fréquence s'inverse pour assurer la transmission de la puissance fournie par l'alternateur vers le réseau. Cette fonction est due au caractère réversible du CSF.
   Il peut éventuellement exister une phase intermédiaire dans laquelle la turbine commence à fournir du couple à l'arbre, et le générateur continue à fonctionner en moteur jusqu'à la vitesse nominale de l'ensemble turbine-générateur. Ensuite seulement le convertisseur statique de fréquence s'inverse pour assurer la transmission de la puissance fournie par le générateur vers le réseau.
c) il peut, outre la fonction principale mentionnée précédemment, assurer l'ensemble des fonctions visées sous a) et b).

On peut réaliser de substantielles économies sur le coût d'un groupe comprenant une turbine à gaz et un alternateur et leurs armoires électroniques de commande et également des économies dans le fonctionnement.

On peut en effet, avec un seul convertisseur statique de fréquence :
- supprimer le réducteur dont le prix de revient est important et qui consomme de l'énergie,
- optimiser, selon l'invention, la vitesse de rotation de la turbine à gaz et de l'ensemble turbine-alternateur, à pleine charge ou à charge partielle, d'où un meilleur rendement de l'ensemble.
- supprimer les délicats problèmes de synchronisation entre la fréquence du réseau et celle de l'alternateur.
- supprimer les armoires dédiées à l'excitation/régulation et à la synchronisation du générateur.

L'invention s'applique à tout type de turbine (turbine à gaz, turbine à vapeur). Le générateur 25 peut indifféremment être un alternateur ou une génératrice asynchrone.

## Revendications

1. Ensemble turbine-générateur de forte puissance supérieure à 60 MW pour la fourniture d'électricité sur un réseau électrique comprenant une turbine (100) et un générateur (11) couplés l'un à l'autre sans réducteur, et un convertisseur statique de fréquence (25) connecté en série entre ledit générateur (11) et un réseau électrique alternatif (13) ayant une fréquence de service de 50 ou de 60 Hz, ledit convertisseur statique de fréquence (25), en régime de production de l'ensemble turbine-générateur, convertissant la fréquence de la tension et du courant délivrés par le générateur (11), à la fréquence de service donnée du réseau électrique alternatif et où, en régime de démarrage de l'ensemble turbine-générateur, ledit convertisseur statique de fréquence (25) alimente le générateur (11) fonctionnant en moteur pour l'allumage des chambres de combustion de la turbine (100), en prélevant de l'énergie sur le réseau électrique alternatif (13), le convertisseur statique de fréquence (25) s'inversant pour assurer la transmission de la puissance fournie par le générateur vers le réseau après allumage des chambres de combustion, la vitesse de rotation de l'ensemble turbine-générateur étant alors ajustée en fonction de la charge débitée dans le réseau électrique alternatif (13).

2. Ensemble turbine-générateur selon la revendication 1 caractérisé en ce que le générateur (11) étant un alternateur (11) de forte puissance comprenant un inducteur (llA), ledit convertisseur statique de fréquence (25), en régime de production de l'ensemble turbine-générateur, agit sur ledit inducteur (11A) pour exciter et/ou réguler ledit alternateur (11).

3. Ensemble turbine-générateur selon la revendication 1 ou 2 caractérisé en ce que le convertisseur statique de fréquence (25) comprend deux ponts à thyristors (25A, 25B) commandés par des transformateurs (29, 30) de mesure de la tension et du courant délivrés par le générateur (11).

4. Ensemble turbine-générateur selon l'une quelconque des revendications précédentes caractérisé en ce que le générateur (25) est un alternateur ou une génératrice asynchrone.

## Patentansprüche

1. Turbinen-Generator-Anordnung mit großer Leistung größer als 60 MW für das Zur-Verfügung-Stellen von Elektrizität an ein elektrisches Netz, umfassend eine Turbine (100) und einen Generator (11), die ohne Untersetzungsgetriebe miteinander gekoppelt sind, sowie mit einem statischen Frequenzwandler (25), der seriell zwischen dem Generator (11) und einem elektrischen Wechselstromnetz (13) angeordnet ist, mit einer Arbeitsfrequenz von 50 oder 60 Hz, wobei der statische Frequenzwandler (25) im Produktionsbetrieb der Turbinen-Generator-Anordnung die Spannungsfrequenz und den Strom, der von dem Generator (11) abgegeben wird, umwandelt in die gegebene Arbeitsfrequenz des elektrischen Wechselstromnetzes und wobei, im Anfahrbetrieb der Turbinen-Generator-Anordnung, der statische Frequenzwandler (25) den Generator (11) versorgt, der als Motor zur Zündung der Verbrennungskammern der Turbine (100) dient, unter Energieentnahme aus dem Wechselstromnetz (13), wobei der statische Frequenzwandler (25) sich invertiert, um die Übertragung der von dem Generator zur Verfügung gestellten Leistung an das Netz nach der Zündung der Verbrennungskammern sicherzustellen, wobei die Rotationsgeschwindigkeit der Turbinen-Generator-Anordnung als Funktion der an das elektrische Wechselstromnetz (13) abgegebenen Last eingestellt wird.

2. Turbinen-Generator-Anordnung nach Anspruch 1, dadurch gekennzeichnet, dass der Generator (11) ein Wechselstromgenerator (11) großer Leistung ist, der einen Induktor (11A) umfasst, wobei der statische Frequenzwechsler (25) im Produktionsbetrieb der Turbinen-Generator-Anordnung auf diesen Induktor (11A) wirkt, um den Wechseistromgenerator (11) anzuregen und/oder zu regulieren.

3. Turbinen-Generator-Anordnung nach Anspruch 1 oder 2, dadurch gekennzeichnet, dass der statische Frequenzwandler (25) zwei Thyristor-Brücken (25A, 25B) umfasst, die durch Transformatoren (29, 30) gesteuert werden, zur Messung der von dem Generator (11) abgegebenen Spannung und des Stromes.

4. Turbinen-Generator-Anordnung nach einem der vorhergehenden Ansprüche, dadurch gekennzeichnet, dass der Generator (25) ein Wechselstromgenerator oder ein Asynchrongenerator ist.

## Claims

1. A turbine generator set providing high power that is greater than 60 MW for supplying electricity to an electricity grid, the turbine generator set comprising a turbine (100) and a generator (11) coupled to each other without a step-down gear box, and a static frequency converter (25) connected in series between said generator (11) and an AC electricity grid (13) having a operating frequency of 50 Hz or 60 Hz, said static frequency converter (25) operating while the turbine generator set is generating electricity to convert the frequency of the voltage and of the current delivered by the generator (11) into the given operating frequency of the AC electricity grid and where, while the turbine generator set is being started, said static frequency converter (25) powers the generator (11) which operates as a motor so as to ignite the combustion chambers of the turbine (100), by taking power from the AC electricity grid (13), the static frequency converter (25) being reversed so as to transmit the power supplied by the generator to the grid after the combustion chambers have been ignited, the speed of rotation of the turbine generator set thus being adjusted as a function of the load delivered to the AC electricity grid (13).

2. A turbine generator set according to claim 1, characterized in that, with the generator (11) being a high-power alternator (11) including an inductor (11A), and while the turbine generator set is generating electricity, said static frequency converter (25) acts on said inductor (11A) so as to excite and/or regulate said alternator (11).

3. A turbine generator set according to claim 1 or 2, characterized in that the static frequency converter (25) comprises two thyristor bridges (25A, 25B) controlled by measurement transformers (29, 30) for measuring the voltage and the current delivered by the generator (11).

4. A turbine generator set according to any preceding claim, characterized in that the generator (25) is an alternator or an asynchronous generator.
